# EUROPÄISCHE PATENTSCHRIFT

(11) **EP 0 838 511 B1**
(45) Veröffentlichungstag und Bekanntmachung des Hinweises auf die Patenterteilung: **30.01.2008**
(21) Anmeldenummer: 98100769.3
(22) Anmeldetag: 14.12.1993
(51) Int. Cl.: C09J 175/08, C08G 18/48, C08G 18/66

(54) **Verwendung eines hydrophilen Polyurethans**
Use of an hydrophilic polyurethane
Utilisation d'un polyuréthane hydrophile

(30) Priorität: 17.12.1992 DE 4242687
(43) Veröffentlichungstag der Anmeldung: 29.04.1998
(62) Teilanmeldung aus: 94903768.3
(73) Patentinhaber: Henkel Kommanditgesellschaft auf Aktien, 40589 Düsseldorf (DE)
(72) Erfinder: Fischer, Herbert, Dr. Dipl.-Chem., 40229 Düsseldorf (DE); Emmerling, Winfried, Dr. Dipl.-Ing., 25436 Tornesch (DE); Möller, Thomas, Dr. Dipl.-Chem., 40593 Düsseldorf (DE); Onusseit, Hermann, Dr. Dipl.-Ing., 42781 Haan (DE); Haller, Werner, Dr. Dipl.-Chem., 40699 Erkrath (DE); Schöttmer, Bernhard, Dr. Dipl.-Ing., 40789 Monheim (DE); Helfterkamp, Bernhard, Dipl.-Chem.-Ing., 46236 Bottrop (DE); Feustel, Dieter, Dr. Dipl.-Chem., 40789 Monheim (DE); Friedrich, Claus, Dr. Dipl.-Ing., 32457 Porta Westfalica (DE); Büsching, Hartmut, 31604 Raddestorf (DE); Hübner, Norbert, Dr. Dipl.-Chem., 40597 Düsseldorf (DE)

(56) Entgegenhaltungen:
- FR-A- 1 279 244
- GB-A- 2 119 807
- US-A- 3 539 482
- DATABASE WPI Section Ch, Week 7907 Derwent Publications Ltd., London, GB; Class A14, AN 79-12757B XP002057075 & JP 54 001 347 A (DAINIPPON INK & CHEM KK) , 8.Januar 1979

## Beschreibung

Die Erfindung betrifft die Verwendung von hydrophilen hochmolekularen nichtionischen Polyurethane als Basis für einen Klebstoff.

Hydrophile Polyurethane gewinnen in Form einer wäßrigen Dispersion zunehmend an Bedeutung. Die Dispersionen können durch Zusatz von Emulgatoren oder durch den Einbau von hydrophilen Gruppen stabilisiert sein. Als hydrophile Gruppe sind ionische Gruppen, insbesondere Salze von Carbonsäuren und Alkalimetallen bzw. Aminen üblich. Es sind aber auch wäßrige Dispersionen von Polyurethanen mit einem nichtionischen inneren Emulgator bekannt.

So wird in der EP 0 497 404 A eine wäßrige Polyurethan-Dispersion auf der Basis von Tetramethylxylol-Diisocyanat beschrieben. Das Polyurethan enthält als inneren Emulgator ein Reaktionsprodukt von Alkoxypolyethylenglykol mit einem Anhydrid, welches dann noch weitem umgesetzt wird mit einem Alkylenoxid, einem Epoxyalkohol oder einem Diglycidylether. Im Beispiel 4 werden a) 133 Gew.-Teile eines Reaktionsproduktes von Methoxypolyethylenglykol und Trimellithsäureanhydrid, das schließlich noch mit Propylenoxid umgesetzt wurde, b) 79 Gew.-Teile Polypropylenglykol, c) 40 Gew.-Teile des Ethylenglykoldiethers von Bisphenol A und d) 146 Gew.-Teile an Isophorondiisocyanat gemischt und 3 Stunden bei 90 °C gehalten. Dann erfolgt bei 45 bis 90 °C eine Kettenverlängerung mit Wasser. Es wurde eine Dispersion mit Partikeln von 50 nm und mit einer guten Wasserbeständigkeit erhalten. Die Dispersion kann zur Herstellung von Klebstoffen und von Farben verwendet werden.
Nachteilig bei derartigen wäßrigen Polyurethan-Dispersionen ist, daß ihre Viskosität auch bei hohen Feststoffkonzentrationen für viele Einsatzgebiete zu niedrig ist, z.B. zum Verkleben von Tapeten. Außerdem ist die Klebkraft und der Tack der entsprechend stark verdünnten Produkte viel zu gering bzw. nicht vorhanden.

K.C. Frisch untersuchte den thermischen und hydrolytischen Abbau von linearen Polyurethanen (Journal of Polymer Science, Vol. 11 (1973) S. 637-648 und S. 1683-1690). Die Polyurethane wurden aus den Diisocyanaten 2,4- und 2,6-Diisocyanato-toluol (TDI), m- und p-Diisocyanato-xylol (XDI) und 4,4-Diisocyanato-dicyclohexylmethan (HMDI) sowie aus Polyoxyethylenglykol mit dem Äquivalentgewicht 190, 1 485 und 2 955 hergestellt. Teilweise wurde auch noch Ethylenglykol als Kettenverlängerer eingesetzt. Aus diesen Bausteinen wurden Polyurethane in Gegenwart von Zinn-octoat als Katalysator bei etwa 70 °C in Lösungsmitteln hergestellt. Die Hydrolyse wurde anhand einer Lösung von 0,75 g in 25 ml Lösungsmittel mit 10 Vol-% an Isopropanol untersucht. Zur weiteren Verwendung der hergestellten Polyurethane wurde nichts gesagt.

In der US 4 079 028 wird ein niedermolekulares Polyurethan als Verdicker für einen Latex und andere wäßrige Systeme beschrieben. Das Polyurethan enthält mindestens 3 hydrophobe Gruppen mit hydrophilen Polyoxyalkylengruppen dazwischen. So kann ein Polyurethan mit einem durchschnittlichen Molekulargewicht (Mw) von 71 000 und mit Dodecyl-Endgruppen hergestellt werden, z.B. aus 200 g Polyethylenglykol, 1,7 g Dodecylisocyanat und 1,4 g TDI in Toluol bei 75 °C in Gegenwart von Dibutylzinnlaurat. Das Molekulargewicht liegt im Bereich von 10 000 bis 200 000. Bei den linearen Polyurethanen (s. Beispiele 1 bis 102) beträgt der Polymerisationsgrad meistens 1 bis 4, maximal 18. Die Tabelle 19 enthält als klare Abgrenzung gegenüber den bekannten linearen Verdickern aus den beiden Komponenten Diol und Monoisocyanat einerseits und Monoalkohol und Diisocyanat andererseits die Reaktionsprodukte aus den drei Komponenten Diol, Diisocyanat und einer monofunktionellen Verbindung wie Monoisocyanat oder einwertige Alkohole oder Amine. Polyethylenglykol, Diisocyanate und gegebenenfalls weitere Polyole werden nicht erwähnt. Die bekannten linearen Polyurethane werden als Verdicker eingesetzt, z.B. auch von Klebstoff-Dispersionen. Nicht erwähnt wird die Verwendung als Klebstoff.

Ähnliches gilt für die US 4,155,892.

In der EP 0 537 900 werden derartige Polyurethane als Verdicker für nichtwäßrige Systeme beschrieben.

Die US 3,539,482 beschreibt lösliche Poly(ether)urethane, die beispielsweise zum imprägnieren von Papier und Fließstoffen zu als Beschichtungsmittel eingesetzt werden können. Diese werden hergestellt aus Polyethylenglykol, Alkylenglykolen beispielsweise Butandiol. Eine Auswahl von hydrophoben Komponenten in diesem Polyurethan wird nicht beschrieben.

Auch in der DE 41 37 247 wird ein Verdicker aus einem linearen Polyurethan beschrieben. Es wird ebenfalls aus einem difunktionellen Isocyanat, einem Polyetherdiol und einem monofunktionellen Alkohol hergestellt.

Daraus ergibt sich als erfindungsgemäße Aufgabe, ein wäßriges System von Polyurethanen bereitzustellen, das bereits bei niedriger Konzentration eine hohe Viskosität hat, das mit Kleistern auch preislich konkurrieren kann und das in jedem Verhältnis mit Wasser mischbar ist.

Die erfindungsgemäße Lösung ist den Patentansprüchen zu entnehmen. Die Erfindung beruht im wesentlichen auf der Verwendung eines hydrophilen hochmolekularen nichtionischen Polyurethans als Basis für einen Klebstoff, das in Wasser löslich ist und dessen Viskosität in Wasser gegebenenfalls durch hydrophobe Wechselwirkungen zusätzlich erhöht wird.

Unter "wasserlöslich" und "hochmolekular" wird die Eigenschaft des Polyurethans verstanden, mit Wasser bei 20 °C eine homogene Mischung zu ergeben, die eine beträchtlich höhere Viskosität als das reine Wasser hat. So beträgt die spezifische Viskosität einer 1 %igen Lösung mindestens 0,4, insbesondere mindestens 0,5, vorzugsweise mindestens 0,7, gemessen bei 20 °C mit einem Ostwald-Viskosimeter. Die Konzentrationsabhängigkeit der spezifischen Viskosität ist im üblichen Maß weitgehend linear. Das durchschnittliche Molekulargewicht Mn beträgt mindestens 10000, vorzugsweise 20000 bis 200000 und besonders bevorzugt 40000 bis 180000 bestimmt nach GPC mit Polystyrol als Eichstandard.

Das hohe Molekulargewicht ergibt sich aus der hohen Viskosität: Die spezifische Viskosität kann bis zu 6,0 betragen, zumindest aber bis zu 4 (1 %ige Lösung bei 20 °C mit einem Ostwald-Viskosimeter). Für Polyurethane mit Polyethylenglykol als alleiniger Diolkomponente ist die Schmelzviskosität bei 175 °C größer als 5, insbesondere größer als 30, vorzugsweise größer als 100 Pas nach Epprecht. Für Polyurethane mit zusätzlichen hydrophoben Diolen ist die Schmelzviskosität größer als 3, vorzugsweise größer als 5 und besonders größer als 10 Pas bei 175 °C. Es können auch Produkte vorkommen, die bei 175 °C schon praktisch fest sind.

3 bis 20 %ige Lösungen haben bei 22 °C eine Viskosität von 20 mPa·s bis standfest (Brookfield, Spindel 7). Eine 2 %ige Lösung hat eine Viskosität von 20 bis 24 000 mPa·s (Brookfield, Spindel 7). Eine 40 %ige Lösung hat eine Viskosität von 700 mPa·s bis standfest, insbesondere von 4 000 bis standfest (Brookfield, Spindel 7).

Aus dem Viskositätsverhalten wird geschlossen, daß es sich um eine weitgehend echte Lösung mit molekularer Verteilung des PUs in dem Wasser handelt. Insbesondere ist das Polyurethan in jedem Verhältnis mit Wasser bei 20 °C mischbar. Es gibt also keine Mischungslücke. Zumindest ist eine wäßrige Lösung mit einem Polymergehalt bis zu 70 Gew.-% herstellbar, bezogen auf die Lösung.
Die wäßrige Lösung ist überraschend stabil. Das gilt nicht nur in Abhängigkeit von der Zeit, sondern auch bei Zusatz von ionischen Verbindungen oder bei Zusatz von organischen Lösungsmitteln. So ist es möglich, bis zu 5 % Kochsalz zuzusetzen. Die wäßrige Lösung ist auch stabil bei Änderung des pH-Wertes. So ist es möglich, den pH-Wert im Bereich von 2 bis 12 zu variieren.

Mit "nichtionisch" ist gemeint, daß das Polyurethan keine ionischen Gruppen als emulgierende Gruppen aufweist, also keine Carboxylat-, Sulfonat-, Phosphonat- oder Ammonium-Gruppen. Die Wasserlöslichkeit ergibt sich vielmehr aus den hydrophilen nichtionischen Gruppen des Polyethylenethers - [CH₂-CH₂-O-]ₙ -. Dabei ist n eine Zahl von 8 bis 500, insbesondere von 20 bis 300 und vor allem von 50 bis 200. Diese Struktureinheiten leiten sich insbesondere von den als Diolen eingesetzten Polyethylenglykolen ab. Unter Polyethylenglykol sind aber nicht nur Polyadditionsprodukte von Ethylenoxid an Wasser oder Ethylenglykol als Startmolekül zu verstehen, sondern auch Polyadditionen an andere zweiwertige Alkohole, z.B. Butandiol, Hexandiol, 4,4'-Dihydroxy-diphenylpropan. Es können auch mehrere Polyethylenglykole eingesetzt werden, die sich im durchschnittlichen Molekulargewicht unterscheiden. Es können auch Copolymere von Ethylenoxid z.B. mit Propylenoxid verwendet werden, sofern sie genügend wasserlöslich sind, d.h. mehr als 10 g in 100 g Wasser bei 20 °C über 6 Monate gelöst bleiben.

Das Polyethylenglykol kann bis zu 50, vorzugsweise bis zu 40, insbesondere bis zu 30 Gew.-% durch andere Diole ersetzt werden, die einen hydrophoben Rest mit einer Wasserlöslichkeit von höchstens 2 g/100 g Wasser enthalten. Bei dem hydrophoben Rest Y handelt es sich um aliphatische oder alicyclische Strukturen mit 6 bis 36 C-Atomen. Die Reste können auch aromatische Strukturen enthalten. Die Stellung der beiden OH-Gruppen kann eine gewisse Bedeutung haben, z.B. für die verdickenden bzw. klebtechnischen Eigenschaften. Bevorzugt werden Diole mit mindestens einer primären OH-Gruppe, insbesondere 1,2- oder alpha,omega-Diole. Aber auch Diole mit vicinaler Stellung der OH-Gruppen sind brauchbar.

Ferner können bis 40 % des Polyethylenglykols durch andere Ethergruppenhaltige hydrophobe Diole ersetzt werden mit Molgewichten von 250 bis 6 000, bevorzugt 650 bis 4 000, insbesondere von 1 000 bis 2 000. Konkrete Beispiele für die hydrophoben Diole und Diethergruppen-haltigen sind: Polypropylenglykol (PPG), Polybutylenglykol, Polytetrahydrofuran, Polybutadiendiol und Alkandiole mit 4 bis 44 C-Atomen. Bevorzugte hydrophobe Diole sind Polypropylenglykol, Polytetrahydrofuran mit einem Molekulargewicht von 400 bis 3 000, insbesondere 1 000 bis 2 000 sowie 1,10-Decandiol, 1,12-Dodecandiol, 1,12-Octadecandiol, Dimerfettsäurediol, 1,2-Octandiol, 1,2-Dodecandiol, 1,2-Hexadecandiol, 1,2-Octadecandiol, 1,2-Tetradecandiol, 2-Buten-1,4-diol, 2-Butin-1,4-diol, 2,4,7,9-Tetramethyl-5-decin-4,7-diol sowie dessen Ethoxylierungsprodukte, insbesondere mit bis zu 30 Molen EO und schließlich Monofettsäureester des Glycerins mit Fettsäuren, welche bis zu 22 C-Atomen enthalten, z.B. Glycerinmonoester der Behensäure, Ölsäure, Stearinsäure, Myristinsäure.

Es werden die hydrophoben Diole allein oder gemischt in einer Menge von 2 bis 30, insbesondere von 5 bis 25 Gew.-%, bezogen auf die insgesamt eingesetzten Diole verwendet.

Um ein hochmolekulares Polyurethan zu erhalten, ist selbstverständlich auf die Reinheit der Diole zu achten. So sollte der Gehalt an Alkali- und Erdalkalimetallionen unter 500 ppm, insbesondere unter 150 ppm und vorzugsweise unter 10 ppm liegen. Außerdem sollte der Wassergehalt unter 0,5, insbesondere unter 0,1, bevorzugt unter 0,05 Gew.-% nach K. Fischer liegen.

Die genannten Diole sind alle bekannt und zum größten Teil auch käuflich im normalen Chemikalienhandel zu erwerben.

Neben den Diolen sind die Diisocyanate wesentliche Bausteine des erfindungsgemäßen Polyurethans. Dabei handelt es sich um Verbindungen der allgemeinen Struktur O=C=N-X-N=C=O, wobei X ein aliphatischer, alicyclischer oder aromatischer Rest ist, vorzugsweise ein aliphatischer oder alicyclischer Rest mit 4 bis 18 C-Atomen.

Beispielsweise seien als geeignete Isocyanate genannt 1,5-Naphthylendiisocyanat, 4,4'-Diphenylmethandiisocyanat (MDI), hydriertes MDI (H₁₂MDI), Xylylendiisocyanat (XDI), Tetramethylxylylendiisocyanat (TMXDI), 4,4'-Diphenyldimethylmethandiisocyanat, Di-und Tetraalkyldiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethyl-cyclohexan (IPDI), chlorierte und bromierte Diisocyanate, phosphorhaltige Diisocyanate, 4,4'-Diisocyanatophenylperfluorethan, Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylen-diisocyanat, Phthalsäure-bisisocyanatoethylester, ferner Diisocyanate mit reaktionsfähigen Halogenatomen, wie 1-Chlormethylphenyl-2,4-diisocyanat, 1-Brommethylphenyl-2,6-diisocyanat, 3,3-Bis-chlormethylether-4,4'-diphenyldiisocyanat. Schwefelhaltige Polyisocyanate erhält man beispielsweise durch Umsetzung von 2 mol Hexamethylen-diisocyanat mit 1 mol Thiodiglykol oder Dihydroxydihexylsulfid. Weitere wichtige Diisocyanate sind Trimethylhexamethylendiisocyanat, 1,4-Diisocyanatobutan, 1,12-Diisocyanatododecan und Dimerfettsäure-diisocyanat. Besonders geeignet sind: Tetramethylen-, Hexamethylen-, Undecan-, Dodecamethylen-, 2,2,4-Trimethylhexan-, 1,3-Cyclohexan-, 1,4-Cyclohexan-, 1,3- bzw. 1,4-Tetramethylxylol, Isophoron-, 4,4-Dicyclohexylmethan und Lysinester-Diisocyanat. Ganz besonders bevorzugt ist das Tetramethylxyloldiisocyanat, insbesondere das m-TMXDI von der Fa. Cyanamid.

Das Molverhältnis von Diol zu Diisocyanat sollte möglichst in der Nähe von 1 : 1 liegen, um ein hohes Molekulargewicht zu erzielen. Das Molverhältnis beträgt im allgemeinen 1 : 0,95 bis 1 : 1,25, vorzugsweise 1 : 0,95 bis 1 : 1,12 und ganz bevorzugt 1 : 0,98 bis 1 : 1,1.

Wenn auf ein besonders hohes Molekulargewicht Wert gelegt wird, sollte auf bekannte Weise eine Kettenverlängerung vorgenommen werden, indem zunächst Prepolymere mit überschüssigem Diisocyanat hergestellt werden, die dann anschließend mit kurzkettigen Diolen oder Diaminen oder mit Wasser verlängert werden. Als Kettenverlängerer seien konkret genannt:
- die üblichen gesättigten und ungesättigten Glykole, wie Ethylenglykol oder Kondensate des Ethylenglykols, Butandiol-1,3, Butandiol-1,4, Butendiol, Propandiol-1,2, Propandiol-1,3, Neopentylglykol, Hexandiol, Bis-hydroxymethyl-cyclohexan, Dioxyethoxyhydrochinon, Terephthalsäure-bis-glykolester, Bemsteinsäure-di-2-hydroxyethylamid, Bernsteinsäure-di-N-methyl-(2-hydroxy-ethyl)amid, 1,4-Di(2-hydroxy-methyl-mercapto)-2,3,5,6-tetrachlorbenzol, 2-Methylenpropandiol-(1,3), 2-Methylpropandiol-(1,3);
- aliphatische, cycloaliphatische und aromatische Diamine wie Ethylendiamin, Hexamethylendiamin, 1,4-Cyclohexylendiamin, Piperazin, N-Methyl-propylendiamin, Diaminodiphenylsulfon, Diaminodiphenylether, Diaminodiphenyldimethylmethan, 2,4-Diamino-6-phenyltriazin, Isophorondiamin, Dimerfettsäurediamin, Diaminodiphenylmethan oder die Isomeren des Phenylendiamins. Weiterhin auch Carbohydrazide oder Hydrazide von Dicarbonsäuren.
- Aminoalkohole wie Ethanolamin, Propanolamin, Butanolamin, N-Methyl-ethanolamin, N-Methyl-isopropanolamin; Diethanolamin, Triethanolamin sowie Di-oder Tri(Alkanolamine).
- aliphatische, cycloaliphatische, aromatische und heterocyclische Mono-und Diaminocarbonsäuren wie Glycin, 1-und 2-Alanin, 6-Aminocapronsäure, 4-Aminobuttersäure, die isomeren Mono-und Diaminobenzoesäuren, die isomeren Mono-und Diaminonaphthoesäuren,

Die erfindungsgemäß zu verwendenden Polyurethane können sowohl in einem einstufigen als auch in einem zweistufigen Verfahren hergestellt werden. In dem zweistufigen Verfahren wird zunächst ein Prepolymeres hergestellt, indem ein Teil der Polyole, z.B. die hydrophilen, mit dem Diisocyanat vorreagieren. Dann wird das nächste Polyol zugesetzt.

Vorzugsweise wird das erfindungsgemäß zu verwendende Polyurethan jedoch in einem einstufigen Verfahren hergestellt. Dabei werden zunächst alle Ausgangsstoffe in Gegenwart eines organischen Lösungsmittels bei einem Wassergehalt von weniger als 0,5 Gew.-% gemischt. Die Mischung wird auf 80 bis 200 °C, insbesondere auf 100 bis 180 °C und vorzugsweise auf 130 bis 170 °C ca. 1 bis 30 Stunden erhitzt. Die Reaktionszeit kann durch Anwesenheit von Katalysatoren verkürzt werden. Insbesondere sind tertiäre Amine brauchbar, z.B. Triethylamin, Dimethylbenzylamin, Bis-Dimethylaminoethylether und Bis-Methylaminomethylphenol. Besonders geeignet sind 1-Methylimidazol, 2-Methyl-1-vinylimidazol, 1-Allylimidazol, 1-Phenylimidazol, 1,2,4,5-Tetramethylimidazol, 1(3-Aminopropyl)imidazol, Pyrimidazol, 4-Dimethylamino-pyridin, 4-Pyrrolidinopyridin, 4-Morpholinopyridin, 4-Methylpyridin. Vorzugsweise wird jedoch ohne Katalysator gearbeitet. Auch das Lösungsmittel wird zweckmäßigerweise weggelassen. Darunter werden inerte organische flüssige Stoffe mit einem Siedepunkt unter 200 °C bei Normaldruck verstanden.

Die erhaltenen erfindungsgemäß zu verwendenden Polyurethane sind bei Raumtemperatur fest und kristallin. Der Kristallisationsgrad schwankt in weiten Bereichen je nach den Ausgangsstoffen und den Kristallisationsbedingungen. Er liegt im allgemeinen bei 20 bis 80 %, insbesondere bei 30 bis 65 %, bezogen auf den Kristallisationsgrad, von käuflichem längerkettigem Polyethylenglykol speziell Polyethylenglykol 6 000 (gemessen mit DSC). Der Schmelzpunkt liegt bei ca. 60 bis 80 °C.

Die erfindungsgemäß zu verwendenden Polyurethane sind in jedem Verhältnis mit Wasser mischbar. Eine viskose Lösung ist beim Auftrag auf wasseraufsaugende Substrate klebrig. Die trockene Verklebung kann durch Einwirkung von Wasser oder von Wärme bei ca. 60 bis 80 °C wieder gelöst werden. Eine Klebstoffschicht kann mit Wasser reaktiviert werden.

Aufgrund dieser Eigenschaften eignet sich das Polyurethan zur Verwendung als Basis zur Herstellung von wasserlöslichen Schmelzklebstoffen oder wiederbefeuchtbaren Klebstoffen für Papier, Wandbeläge und Etiketten. Für diese Anwendung dürfte es von großer Bedeutung sein, daß die Polyurethane nicht hygroskopisch sind.

Insbesondere eignet sich das Polyurethan als Tapetenklebstoff, vor allem wenn in dem hydrophoben Rest (Komponente c) Y ein Alkylen- oder Cycloalkylen-Rest mit 2 bis 44 C-Atomen ist, wobei die verknüpften Radikale in 1,2- oder alpha, omega-Stellung stehen und wobei die Komponente c) 5 bis 25 Gew.-%, bezogen auf die Summe der Komponenten a) und b) im Polyurethan ausmacht. Das erfindungsgemäße Polyurethan ergibt bereits alleine, das heißt ohne weitere Additive, als 0,5 bis 10, insbesondere 1 bis 5 gewichtsprozentige wäßrige Lösung einen guten Tapetenklebstoff mit universellen Haftungseigenschaften, z.B. auf Kunststoffen wie PVC-oder auf lackierten Flächen. Seine Klebkraft ist so hoch, daß ohne weiteres auch schwere Tapeten damit verklebt werden können. Aufgrund der hohen und steuerbaren Wasserfestigkeit eignet er sich insbesondere zum Tapezieren in Feuchträumen. Natürlich können auch die üblichen nicht filmbildenden Additive zugesetzt werden, wie z.B. Emulgatoren, Farbstoffe und Geruchsstoffe. Die einsetzbaren Polyurethane lassen sich aber auch mit anderen Polymeren aus Tapetenklebstoffen gut mischen, ohne deren Redispergierbarkeit negativ zu beeinflussen. So können insbesondere Celluloseether in den bisherigen Klebstoff-Rezepturen ganz oder teilweise ersetzt werden. Es ist aber auch der Ersatz der anderen filmbildenden Komponenten möglich, also z.B. der von Stärkeethem und von redispergierbaren Polymeren. Selbstverständlich ist aber auch eine Kombination mit allen diesen drei Stoffklassen möglich. Zu der Stoffklasse der wasserlöslichen Celluloseether zählen nichtionische Stoffe wie Methyl-, Methyl-hydroxyethyl-, Methyl-hydroxypropyl-, Hydroxypropyl-und Hydroxyethyl-Cellulose. Zu dem ionischen wasserlöslichen Celluloseether zählen z.B. Methyl/Carboxymethyl-und Carboxymethyl-Cellulose. Zu der Stoffklasse der wasserlöslichen Stärkederivate zählen z.B. Quell-, Carboxymethyl-, Hydroxypropyl-, und Hydroxypropyl-carboxymethyl-Stärke. Zu der Stoffklasse der in Wasser bei Raumtemperatur redispergierbaren Polymeren zählen insbesondere Homo- und/oder Copolymere von Vinylestern mit niedrigen Carbonsäuren mit 1 bis 22, insbesondere 2 bis 4 C-Atomen wie z.B. Vinylacetat, Vinylpropionat und Vinyllaurat. Auch Copolymerisate, insbesondere von Vinylacetat mit folgenden Comonomeren sind von Bedeutung: Maleinate, Ethylen und Vinylchlorid. Aber auch Homo-und Copolymere von (Meth)acrylaten mit 1 bis 4 C-Atomen in der AlkoholKomponente können verwendet werden, z.B. Styrolacrylate.

Auch in minearlischen Bindemitteln lassen sich die erfindungsgemäß zu verwendenden Polyurethane vorteilhaft einsetzen, z.B. in Fliesen-Klebstoffen. Dafür eignen sich zweckmäßigerweise Polyurethane, in denen X ein Rest von n-Tetramethylxyloldiisocyanat ist und in denen Y eine Alkylen- oder Cycloalkylen-Gruppe mit 2 bis 44 C-Atomen mit einer 1,2- oder alpha,omega-Stellung der radikalischen C-Atome ist und wobei die Komponente c) 5 bis 25 Gew.-%, bezogen auf die Summe a) + b) in Polyurethan ausmacht. Insbesondere wird als hydrophobes Diol 1,12-Dodecandiol oder Dimerdiol eingesetzt. Ein konkretes Beispiel für die Zusammensetzung eines Fliesenklebstoffes ist z.B.: 35 Gew.-Teile von Portland-Zement F-45, 62 Gew.-Teile von Quarzsand F-36, 3 Gew.-Teile von Vinylacetat-Copolymeren und 69 Gew.-Teile einer 4 %igen wäßrigen Lösung des erfindungsgemäßen Polyurethans, wobei X = TMXDI und Y Reste des 1,2-Dodecandiols bzw. Dimerdiols sind.

Die erfindungsgemäß einsetzbaren Polyurethane eignen sich auch zur Teppichfixierung. Sie zeichnen sich durch eine relativ große Wasserlöslichkeit sowie durch eine längere Verschiebbarkeit der Teppiche beim Verlegen aus.

Die erfindungsgemäß einsetzbaren Polyurethane eignen sich auch zur Stabilisierung zweiphasiger Systeme mit Wasser als kontinuierlicher Phase, insbesondere bei der Suspensions- und Emulsions-Polymerisation. Sie eignen sich insbesondere als Stabilisator bei der Emulsions-Polymerisation von Vinylacetat und Vinylchlorid, sei es zur Herstellung von Homopolymerisaten oder von Copolymerisaten wie Ethylen-Vinylacetat-Copolymeren. Zweckmäßigerweise beträgt ihre Konzentration 2,5 bis 10 g/100 g Emulsion, insbesondere 3 bis 7 g/100 g.

Die erfindungsgemäß einsetzbaren Polyurethane eignen sich auch als Verdickungsmittel bzw. Quellmittel für wäßrige Systeme, da sie bereits in geringen Konzentrationen die Viskosität stark erhöhen. Bemerkenswert ist, daß die Verdickerwirkung durch Elektrolyte kaum beeinflußt wird und durch Zusätze an nichtionischen Tensiden noch erheblich gesteigert werden kann. Für diesen Zweck eignen sich insbesondere Polyurethane, bei denen sich Y von Polypropylenglykol, Polytetrahydrofuran, 1,12-Dodecandiol, 1,12-Octadecandiol oder Dimerdiol ableitet. Die Komponente c) sollte in einer Menge von 5 bis 25 Gew.-%, bezogen auf die Summe der Komponenten a) + c) in Polymeren vorliegen. Die bevorzugten Einsatzbereiche als Verdickungsmittel sind: Klebstoffdispersionen, Kosmetika, Handgeschirrspülmittel und Systeme im Bereich von Mining Oilfield.

Die für die Verdickung geeigneten nichtionischen Tenside können zugesetzt werden in Mengen von 1 bis 99, insbesondere 10 bis 80 und vorzugsweise 30 bis 70 Gew.-%, bezogen auf die Mischung aus Polyurethan und nichtionischem Tensid.

Unter nichtionischen Tensiden sind zu verstehen:
1. Partielle Ester von Polyalkoholen: z.B. Glyzerinmono- bzw. - distearate und -oleate, Sorbitmonostearat und -oleat.
2. Ethylenoxid- bzw. Propylenoxid-Addukte: z.B. mit Fettsäuren, Fettalkoholen, Fettaminen (diese Produkte können auch kationaktivische Eigenschaften haben), partiellen Fettsäureestern mehrwertiger Alkohole, meist des Glyzerins und des Sorbits, Alkylphenolen, Wasser (Polyalkylenglykols).
3. Amide höherer Fettsäuren: z.B. Stearinsäureethanolamid, allgemeine Fettsäureamide.
4. Lecithine.
5. Steroide: z.B. Cholesterin, Dihydrocholesterin, Hydroxycholesterin, Phytosterine, Zymosterin (Protegin, Eucerin, Amphocerin, Dehymuls u.a.).

Typische Beispiele für nichtionische Tenside sind Fettalkoholpolyglykolether, Alkylphenolpolyglykolether, Fettsäurepolyglykolester, Fettsäureamidpolyglykolether, Fettaminpolyglykolether, alkoxylierte Triglyceride, Alk(en)yloligoglykoside, Fettsäureglucamide, Polyolfettsäureester, Zuckerester, Sorbitanester und Polysorbate. Sofern die nichtionischen Tenside Polyglykoletherketten enthalten, können sie eine konventionelle, vorzugsweise jedoch eine eingeengte Homologenverteilung aufweisen. Besonders geeignet sind Ethoxylierungsprodukte von Fettsäuren oder Fettalkoholen der allgemeinen Formel 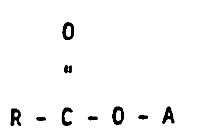 oder R - CH₂ - O - A.
R bedeutet einen linearen oder verzweigten Alkylrest, der gesättigt oder ungesättigt sein kann.
R kann aus 1 bis 43, vorzugsweise aus 6 bis 23, insbesondere 8 bis 23 besonders bevorzugt 12 bis 23 C-Atomen aufgebaut sein. Die Ethoxylierungsprodukte können auch aus Gemischen von Fettsäuren oder Fettalkoholen unterschiedlicher Alkylreste bestehen.
A in den oben erwähnten Formeln bedeutet eine Kette von 1 bis 200, vorzugsweise 3 bis 50, insbesondere 4 bis 30, Ethylenoxideinheiten.
Weiterhin können bis zu 80 Äquivalente, vorzugsweise bis zu 50 Äquivalente an Ethylenoxideinheiten durch Propylenoxideinheiten ersetzt sein. Die Endgruppe der Alkylenoxideinheiten kann aus einer Hydroxylfunktion bestehen. Wahlweise kann deren O-Atom jedoch auch mit Alkyl-, Alkenyl- oder Aralkylgruppen verethert sein.

Die Erfindung wird anhand folgender Beispiele im einzelnen erläutert:

### Beispiele

### A) Herstellung und Eigenschaften von wasserlöslichen hochmolekularen Polyurethanen

### Beispiel 1

In einem 21 Dreihalskolben mit Rührer und N₂-Zuleitung wurden 1 500 g Polywachs 6000 (Polyethylenglykol Lipoxol - Fa. Hüls; 0,5 Äquivalent) 1 h bei 80 °C und 1 mbar Unterdruck entwässert. Danach wurde mit N₂ belüftet, 67,2 g m-TMXDI (Fa. Cyanamid; 0,55 Äquivalent) zugegeben und bei 170 °C in N-Atmosphäre N₂ gerührt. Nach 5 h betrug der NCO-Gehalt 0,06 %. Es wurde heiß abgefüllt.
Schmelzviskosität: 61 Pa·s (175 °C, Epprecht)
Viskosität (40 %ige wäßrige Lösung): 17 000 mPa·s (Sp. 7, Brookfield),
spez. Viskosität (1 %ige wäßrige Lösung): 0,9 (Ostwald)

### Beispiel 1a

In einem 1 l Dreihalskolben mit Rührer und N₂-Zuleitung wurden 620 g Polywachs 6000 (Polyethylenglykol Lipoxol - Fa. Hüls; 1 Äquivalent) 1 h bei 80 °C und 1 mbar Unterdruck entwässert. Danach wurde mit N₂ belüftet, 26,4 g m-TMXDI (Fa. Cyanamid; 1,08 Äquivalente) zugegeben und homogenisiert. Die Substanz wurde dann in eine Weißblechdose umgefüllt und bei 145 °C getempert. Nach 2 h betrug der NCO-Gehalt 0,1 %. Es wurde heiß abgefüllt.
Schmelzviskosität: 105 Pas (175 °C, Epprecht),
Viskosität (40 % wäßrige Lösung): 33 000 mPas,
spez. Viskosität (1 % wäßrige Lösung): 1,1 (Ostwald).

### Beispiel 2

Analog zu Beispiel 1 wurden in einem 500 ml Kolben 240 g Polywachs 6000 (0,08 Äquivalent) und 20 g Voranol P 2000 (Polypropylenglykol der Fa. Dow; 0,02 Äquivalent) entwässert.
Zugabe von 12,46 g m-TMXDI (0,102 Äquivalent).
Nach 5 h betrug der NCO-Gehalt 0,08 %.
Schmelzviskosität: 25 Pa·s (175 °C, Epprecht)
Viskosität (40 %ige wäßrige Lösung): 300 000 mPa·s (Sp. 7, Brookfield), spez. Viskosität (1 %ige wäßrige Lösung): 0,8 (Ostwald).

### Beispiel 3

Analog zu Beispiel 1 wurden in einem 1 l Kolben
450 g Polywachs 6000 (0,15 Äquivalent) und
150 g Voranol P 2000 (0,15 Äquivalent) entwässert.
Zugabe von 37,4 g m-TMXDI (0,306 Äquivalent).
Nch 5 h betrug der NCO-Gehalt 0,12 %.
Schmelzviskosität: 6 bis 8 Pa·s (175 °C, Epprecht)
Viskosität (20 %ige wäßrige Lösung): 600 mPa·s (Sp. 7, Brookfield) spez. Viskosität (1 %ige wäßrige Lösung): 0,6 (Ostwald).

### Beipsiel 4

Analog zu Beispiel 1 wurden in einem 500 ml Kolben
240 g Polywachs 6000 (0,08 Äquivalent) u.
20 g PTHF 2000 (Polytetrahydrofuran der Fa. BASF; 0,02 Äquivalent) entwässert.
Zugabe von 12,46 g m-TMXDI (0,102 Äquivalent).
Nach 5 h betrug der NCO-Gehalt 0,06 %
Schmelzviskosität: 21 Pa·s (175 °C, Epprecht)
Viskosität (20 %ige wäßrige Lösung): 8 000 mPa·s (Sp. 7, Brookfield), spez. Viskosität (1 %ige wäßrige Lösung): 0,85 (Ostwald).

### Beispiel 5

Analog zu Beispiel 1 wurden in einem 500 ml Kolben 300,4 g Polydiol
600 (Polyethylenglykol - Fa. Hüls; 0,88 Äquivalente entwässert.
Zugabe von 108,9 g m-TMXDI (1,01 Äquivalent).
Nach 5 Stunden betrug der NCO-Gehalt o,14 %.
Schmelzviskosität: 0,4 Pa·s (175 °C, Epprecht).
Viskosität (100 %ig): 600 000 mPa·s (Sp. 7, Brookfield), spez.
Viskosität (1 %ige wäßrige Lösung, Ostwald): 0,2.

### Beispiel 6

Analog zu Beispiel 1 wurden in einem 500 ml Kolben 233,80 g
Polywachs 12 000 (0,04 Äquivalent) entwässert.
Zugabe von 5,1 g m-TMXDI (0,042 Äquivalent).
Nach 5 h betrug der NCO-Gehalt 0 %.
Schmelzviskosität: 20 Pa·s (175 °C; Epprecht).
Viskosität (40 %ige wäßrige Lösung): 4 600 mPa·s (Sp.7, Brookfield), spez. Viskosität (1 %ige wäßrige Lösung, Ostwald): 1,7.

### Beispiel 7

Analog zu Beispiel 1 wurden in einem 500 ml Kolben 300 g Polywachs
6 000 (0,1 Äquivalent) und
20,2 g 1,12-Dodecandiol (Fa. Fluka; 0,2 Äquivalent) entwässert.
Zugabe von 37,9 g m-TMXDI (0,31 Äquivalent).
Nach 5 Stunden betrug der NC0-Gehalt 0,12 %.
Schmelzviskosität: 40 Pa·s (175 °C, Epprecht).
Viskosität (4 %ige wäßrige Lösung): 20 000 mPa·s (Brookfield, Sp. 7), spez. Viskosität (1 %ige wäßrige Lösung, Ostwald): 0,5.

### Beispiel 7a

Der Versuch wurde analog zu Beispiel 7 durchgeführt, wobei die Reaktionstemperatur bei 150 °C lag.
Viskosität (4 %ige wäßrige Lösung): 5 200 mPa·s (Brookfield, Sp. 7).

### Beispiel 8

Analog zu Beispiel 1 wurden in einem 500 ml Kolben 216 g PW 6000 (vorbehandelt mit Ionenaustauscher Lewatit SP 112 - Fa. Bayer;
0,073 Äquivalent) entwässert.
Zugabe von 9,8 m-TMXDI (0,08 Äquivalent).
Nach 24 Stunden betrug der NCO-Gehalt 0,1 %.
Schmelzviskosität: 2,4 Pa·s (175 °C, Epprecht).
Viskosität (40 %ige wäßrige Lösung): 800 mPa·s (Sp. 7; Brookfield), spez. Viskosität (1 %ige wäßrige Lösung; Ostwald): 0,5.

### Beispiel 9

Analog zu Beispiel 1 wurden in einem 500 ml Kolben 190,8 g PW 6000 (vorbehandelt mit Tonsil standard; 0,071 Äqu) entwässert.
Zugabe von 7,7 g Trimethylhexamethylendiisocyanat (Fa. Hüls; 0,074 Äquivalente).
Nach 4 Stunden betrug der NCO-Gehalt 0 %.
Schmelzviskosität: > 64 Pa·s (175 °C, Epprecht).
Viskosität (20 %ige wäßrige Lösung): 3 000 mPa·s (Sp. 7, Brookfield), spez. Viskosität (1 %ige wäßrige Lösung; Ostwald): 2,2.

### Beispiel 10

Analog zu Beispiel 1 wurden in einem 500 ml Kolben 300 g PW 6000 (0,1 Aquivalent) und 18,35 g Hexadecandiol-1,2 (0,14 Äquivalent) entwässert.
Zugabe von 30,55 g m-TMXDI (0,25 Äquivalent).
Nach 4 Stunden betrug der NCO-Gehalt 0 %.
Schmelzviskosität: 1 Pa·s (175 °C; Epprecht).
Viskosität (20 %ige wäßrige Lösung): 65 000 mPa·s (Sp. 7, Brookfield), spez. Viskosität (1 %ige wäßrige Lösung, Ostwald): 0,6.

### Beispiel 11

Analog zu Beispiel 1 wurden in einem 500 ml Kolben 133,55 g PW 6000 (vorbehandelt mit Tonsil standard; 0,05 Äquivalent) entwässert. Zugabe von 6,7 g m-TMXDI (0,055 Äquivalent).
Nach 6 Stunden betrug der NCO-Gehalt 0,2 %.
Zugabe von 0,7 g Diphenylmethandiamin (0,007 Äquivalent).
Nach 1 Stunde betrug der NCO-Gehalt 0 %.
Schmelzviskosität: 56 Pa·s (175 °C; Epprecht).
Viskosität (20 %ige wäßrige Lösung): 400 mPa·s (Sp. 7, Brookfield), spez. Viskosität (1 %ige wäßrige Lösung, Ostwald): 1,1.

Bei den Beispielen 12 und 13 handelt es sich um PEG/PPG-Beispiele zum Beweis der Löslichkeitsgrenze von PPG (Beispiel 12 noch löslich, Beispiel 13 unlöslich in Wasser). Löslichkeitsgrenze ~ 60 % PEG, 40 % PPG.

### Beispiel 12

Analog zu Beispiel 1 wurden in einem 1 l Kolben 390 g Polywachs 6000 (0,13 Äquivalent) und 220 g Voranol P 2000 (0,22 Äquivalent) entwässert. Zugabe von 44,6 g m-TMXDI (0,365 Äquivalent).
Nach 5 Stunden betrug der NCO-Gehalt 0,2 %.
Schmelzviskosität < 1 Pa·s (175 °C; Epprecht).
Viskosität (30 %ige wäßrige Lösung): 5 000 mPa·s (Sp. 7, Brookfield), spez. Viskosität (1 %ige wäßrige Lösung; Ostwald): 0,4.

### Beispiel 13

Analog zu Beispiel 1 wurden in einem 500 ml Kolben 150 g Polywachs 6000 (0,05 Äquivalent) und 130 g Voranol P 2000 (0,13 Äquivalent) entwässert. Zugabe von 22,85 g m-TMXDI (0,187 Äquivalent).
Nach 8 Stunden betrug der NCO-Gehalt 0,2 %.
Schmelzviskosität < 1 Pa·s (175 °C; Epprecht).

### Beispiel 14 (Einbau von Dimerdiol)

Analog zu Beispiel 1 wurden in einem 500 ml Kolben 300 g Polywachs 6000 (0,1 Äquivalent) und 18,9 g Dimerdiol (0,07 Äquivalent) entwässert. Zugabe von 22,0 g m-TMXDI (0,18 Äquivalent).
Nach 5 Stunden betrug der NCO-Gehalt 0,094 %.
Schmelzviskosität: 32 Pa·s (175 °C; Epprecht).
Viskosität (5 %ige wäßrige Lösung): 40 000 mPa·s (Sp. 7, Brookfield), spez. Viskosität (1 %ige wäßrige Lösung, Ostwald): 2,3.

### Beispiel 15

Analog zu Beispiel 1 wurden in einem 5 l Kolben 1772 g Polywachs 6000 (0,6 Äquiv.), 137 g 1,12-Octadecandiol (0,84 Äquiv.) entwässert.
Zugabe von 183 g m-TMXDI (1,5 Äquiv.).
In Abwandlung zu Beispiel 1 wurde die Reaktion bei einer
Temperatur von 150 °C durchgeführt,
Versuchsdauer 4,5 Std.,
Schmelzviskosität 27,5 Pas (175 °C, Epprecht),
spez. Viskosität: 1,1,
Viskosität (3 %ige wäßrige Lösung): 16000 mPas.

### B) Anwendung der Polyurethane

### I. Klebeeigenschaften von 40 %igen wäßrigen Lösungen

Geprüft wurde die Zugscherfestigkeit von Holz-Holz-Verklebungen nach DIN 53283:

| | |
|---|---|
| Beispiel 1 | 6,8 N/mm² |
| Beispiel 2 | 4,6 N/mm² |
| Beispiel 3 | 2,8 N/mm² |
| Beispiel 4 | 6,6 N/mm² |

### II. Klebeeigenschaften als Schmelzklebstoff

Geprüft wurde die Zugscherfestigkeit von Holz/Holz-Verklebungen nach DIN 53283:

| | |
|---|---|
| Beispiel 1 | 8,3 N/mm² |
| 2 | 5,3 " |
| 3 | 5,0 " |
| 4 | 7,8 " |
| 6 | 5,8 " |
| 7 | 7,5 " |
| 11b | 8,9 " |

### III.Klebeeigenschaften einer verdünnt wäßrigen Lösung (Tapetenkleister)

Eine 5 %ige Lösung (Beispiel 7; Viskosität: 25 000 mPa·s, Sp.7, Brookfield) wurde auf Papier aufgetragen und mit Gipskarton bzw. Gipsputz verklebt. Nach dem Trocknen war eine so feste Verbindung zwischen Papier und Untergrund gegeben, daß bei Schälversuchen Papierausriß auftrat.

### IV. Verwendung als Schutzkolloid

a) Homopolymerisation von Vinylacetat unter Verwendung des Polyurethans nach Beispiel 1 und des Emulgators Nonylphenol x 10 EO.
   In einem Reaktionsgefäß, das mit Rührer, Thermometer, zwei Zutropfgefäßen sowie einem Rückflußkühler versehen ist, wurden in 850 g entsalztem Wasser 10 g eines Umsetzungsproduktes von p-Alkylphenol (mit 6 bis 15 C-Atomen im Alkylrest) und 6,5 bis 30 Mol Ethylenoxid, 2 g Natriumhydrogencarbonat und 100 g eines Umsetzungsproduktes aus Polyethylenglykol und Isocyanat bei Temperaturen > 80 °C gelöst. Zu dieser Lösung wird bei 80 °C eine Lösung aus 0,5 g Natriumformaldehydsulfoxylat in 50 g entsalztem Wasser gegeben. Im Zutropfgefäß A werden 887 g Vinylacetat Monomer bereitgestellt. Im Zutropfgefäß B werden eine Mischung aus 0,5 g t-Butylhydroperoxid und 100 g entsalzenem Wasser bereitgestellt.
   Bei Temperaturen zwischen 75 und 80 °Cwird mit der kontinuierlichen Dosierung aus den Zutropfgefäßen A und B begonnen. Nach Einsetzen der Polymerisation wird die kontinuierliche Dosierung aus A und B so gesteuert, daß sich eine Reaktionstemperatur von 80 bis 85 °C einstellt. Die Reaktionsdauer beträgt ca. 3,5 bis 4 Stunden.
b) Copolymerdispersion unter Verwendung des Polyurethans nach Beispiel 1 und des Emulgators Nonylphenol x 10 EO.In einem Reaktionsgefäß (wie unter a beschrieben) werden in 849 g entsalztem Wasser 40 g eines Umsetzungsproduktes von p-Alkylphenol (mit 6 bis 15 C-Atomen im Alkylrest) und 6,5 bis 30 Mol Ethylenoxid und 150 g eines Umsetzungsproduktes aus Polyethylenglykol und Isocyanat bei Temperaturen > 80 °C gelöst. Zu dieser Lösung wird bei 80 °C eine Lösung aus 1,5 g Natriumformaldehydsulfoxylat in 50 g entsalztem Wasser gegeben. Im Zutropfgefäß A werden 539 g Vinylacetat Monomer und 270 g Maleinsäuredibutylester gemischt und bereitgestellt. Im Zutropfgefäß B werden eine Mischung aus 0,5 g t-Butylhydroperoxid und 100 g entsalztem Wassr bereitgestellt. Bei einer Temperatur zwischen 75 und 80 °C wird mit den kontinuierlichen Dosierungen aus den Zutropfgefäßen A und B begonnen. Nach Einsetzen der Polymerisation wird die kontinuierliche Dosierung so gesteuert, daß sich eine Reaktionstemperatur von 80 bis 85 °C einstellt. Die Reaktionsdauer beträgt ca. 3,5 bis 4 Stunden.

In beiden Fällen resultierten stabile koagulatfreie Dispersionen mit einer Teilchengröße von 660 nm. Die Dispersionen ergeben relativ weiche gut wasserfeste Filme.

### V. Verwendung als Verdickungsmittel (nicht beansprucht)

Die verdickende Wirkung der erfindungsgemäß zu verwendenden Polyurethane sowie das Zusammenwirken mit Salzen und mit nichtionischen Tensiden wird durch folgende Beispiele veranschaulicht.

**Tabelle 1: Verwendung der erfindungsgemäßen Polyurethane als Verdickungsmittel: Viskosität (Brookfield, 22 °C) in Pas als Funktion der Polymerkonzentration**

| Lfd. Nr. | Ausgangsprodukte für das PU | | | | Konzentration des PU in Wasser | | | | |
|---|---|---|---|---|---|---|---|---|---|
| | Polyethylen-glykol | hydrophobes Diol | Isocyanat | Äquivalentsverhältnis | in Gew.-% | | | | |
| | | | | | 5 | 4 | 3 | 2 | 1 |
| 1 . | PEG 6000 | 1,12-C₁₂-Diol | TMXD1 | 1 : 2 : 3,1 | | | | | |
| a) | ohne NaCL-Zusatz | | | | standfest | 24000 | 5000 | 200 | 100 |
| b) | mit 1 Gew.-% an NaCl | | | | standfest | 17000 | | 200 | |
| c) | mit 5 Gew.-% an NaCl | | | | standfest | 13000 | | 200 | |
| d) | mit 20 Gew.-% an NaCl | | | | standfest | 100 | | | |
| e) | ohne NaCl-Zusatz | | | | standfest | 52000 | 11000 | 300 | 200 |
| 2. | PEG 6000 | 1,12-C₁₈-Diol | TMXDI | 1 : 1,4 : 2,5 | standfest | 60000 | 14000 | 600 | 100 |
| 3. | PEG 6000 | Loxanol | TMXDI | 1 : 1,4 : 2,5 | standfest | | 16000 | 400 | 100 |
| 4. | PEG 6000 | Dimerdiol | TMXDI | 1 : 1,1 : 2,2 | standfest | | 4000 | | 100 |
| 5. | PEG 6000 | PPG 2000 | TMXDI | 0,5 : 0,5 : 1,02 | | | | | |
| a) | mit 5 Gew.-% an NaCl | | | | | 40000 | (auch nach 2 Wochen) | | |
| b) | mit 25 Gew.-% an NaCl | | | | | 2000 | | | |
| 6. | PEG 6000 | PTHF 2000 | TMXDI | 0,7 : 0,3 : 1,02 | | | | | |
| a) | mit 5 Gew.-% an NaCl | | | | | 43000 | (35000 nach 2 Wochen) | | |
| b) | mit 20 Gew.-% an NaCl | | | | | 26000 | | | |
| 7. | PEG 6000 1,12-C₁₂-Diol | | TMXDI | 1: 2,5: 2,6 | | | | | |
| a) | ohne Tensid-Zusatz als 3 %ige Lösung | | | | | | 800 | | |
| b) | mit Dehydol LT7 im Gewichtsverhältnis 7: 3 (PU: Dehydol) | | | | | | 11000 | | |
| | als 3 %ige Lösung mit 2,1 Gew.-% an PU | | | | | | | | |
| c) | mit Dehydol LT7 im Gewichtsverhältnis 6 : 4 (PU : Dehydol) | | | | | | | | |
| | als 4 %ige Lösung mit 2,4 Gew.-% an PU | | | | | | 52000 | | |

| | | | | | | | | | |
|---|---|---|---|---|---|---|---|---|---|
| **Anmerkungen** - PPG: Polypropylenglykol, - PTHF: Polytetrahydrofuran, - Loxanol: 1,12-Octadecandiol, technisch. - Dehydol LT 7: Umsetzungsprodukt von 1 Mol C₁₂₋₁₈-Fettalkohol mit 7 Molen Ethylenoxid, - Das Beispiel 1e) wurde im Unterschied zu den Beispielen 1a) bis 1d) bei 145 in 4 Stunden hergestellt. | | | | | | | | | |

## Patentansprüche

1. Verwendung eines hydrophilen hochmolekularen nichtionischen wasserlöslichen Polyurethans mit einer spezifischen Viskosität von mindestens 0,4 (1 %ige wäßrige Lösung bei 20 °C) als Basis für einen Klebstoff, wobei das Polyurethan die folgenden Struktureinheiten aufweist:
a) -O(-CH2-CH2-O)ₙ-,
wobei n = 8 bis 500, insbesondere 20 bis 300 ist
b) -CO-NH-X-NH-CO-,
wobei X ein aliphatischer, alicyclischer oder aromatischer Rest ist, und
c) -O-Y-O-,
wobei Y ein hydrophober Rest ist, insbesondere entweder
(-CH₂-CH(CH₃)-O)ₘ-CH₂-CH(CH₃)-,
(-CH₂CH(C₂H₅)-O)ₘ-CH₂-CH(C₂H₅)- und
(-CH₂-CH₂-CH₂CH₂-O)ₘ-CH₂-CH₂-CH₂CH₂-)
mit m = 8 bis 500, insbesondere 20 bis 300, oder aber Alkylen- oder Cycloalkylen-Gruppen mit 6 bis 36 C- Atomen, wobei c) von 2 bis 30, vorzugsweise 5 bis 25 Gew.%, bezogen auf a) + c) im Polyurethan ausmacht.

2. Verwendung nach Anspruch 1, **gekennzeichnet durch** eine Wasserlöslichkeit des Polyurethans in jedem Mischungsverhältnis bei 20 °C, insbesondere durch eine Wasserlöslichkeit von mindestens 70 Gew.-%, bezogen auf die Lösung.

3. Verwendung nach Anspruch 1 oder 2, **gekennzeichnet durch** ein Polyurethan mit einem Molekulargewicht, das **durch** eine spezifische Viskosität von 0,5 bis 6,0, insbesondere 0,7 bis 4,0, **gekennzeichnet** ist (1 %ige wäßrige Lösung bei 20 °C).

4. Verwendung nach mindestens einem der Ansprüche 1, 2 oder 3, **gekennzeichnet durch** ein Polyurethan mit einer Schmelzviskosität von mehr als 3, vorzugsweise mehr als 5 und insbesondere mehr als 10 Pas bei 175 °C nach Epprecht für Polyurethane mit Polyethylenglykol und zusätzlichen hydrophoben Diolen.

5. Verwendung nach mindestens einem der Ansprüche 1 bis 4, **gekennzeichnet durch** ein Polyurethan mit einem Kristallisationsgrad von 20 bis 80, insbesondere von 30 bis 65 %, bezogen auf den Kristallisationsgrad von Polyethylenglykol speziell käufliches Polyethylenglykol 6 000.

6. Verwendung nach mindestens einem der Ansprüche 1 bis 5 in Form einer wäßrigen Lösung von 1 bis 40, insbesondere von 2 bis 30 Gew. -% des Polyurethans.

7. Verwendung nach mindestens einem der Ansprüche 1 bis 6, **dadurch gekennzeichnet, daß** der hydrophobe Rest des Polyurethans von mindestens einem der folgenden Diole stammt: Polypropylenglykol, Polytetrahydrofuran (beide mit Molekulargewichten 400 bis 3000, insbesondere 1000 bis 2000), 1,10-Decandiol, 1,12-Dodecandiol, 1,12-Octadecandiol, 1,2- Octandiol, 1,2-Dodecandiol, 1,2-Tetradecandiol, 1,2-Hexadecandiol und 1,2-Octadecandiol.

8. Verwendung des Polyurethans nach mindestens einem der Ansprüche 1 bis 7 als Basis für einen Schmelzklebstoff oder als Lösungsklebstoff, z.B. Tapetenklebstoff oder Etikettierklebstoff.

## Claims

1. Use of a hydrophilic, high molecular weight, nonionic, water-soluble polyurethane having a specific viscosity of at least 0.4 (1% strength aqueous solution at 20°C) as a basis for an adhesive, said polyurethane having the following structural units:
a) -O(-CH2-CH2-O)ₙ-,
where n = 8 to 500, more particularly 20 to 300,
b) -CO-NH-X-NH-CO-,
where X is an aliphatic, alicyclic or aromatic radical, and
c) -O-Y-O-,
where Y is a hydrophobic radical, more particularly either
(-CH₂-CH(CH₃)-O)ₘ-CH₂-CH(CH₃)-,
(-CH₂CH(C₂H₅)-O)ₘ-CH₂-CH(C₂H₅)- and
(-CH₂-CH₂-CH₂CH₂-O)ₘ-CH₂-CH₂-CH₂CH₂-)
with m = 8 to 500, more particularly 20 to 300, or else alkylene or cycloalkylene groups having 6 to 36 C atoms, where c) makes up from 2% to 30%, preferably 5% to 25% by weight, based on a) + c) in the polyurethane.

2. Use according to Claim 1, **characterized by** a water-solubility of the polyurethane in any mixing ratio at 20°C, more particularly by a water-solubility of at least 70% by weight, based on the solution.

3. Use according to Claim 1 or 2, **characterized by** a polyurethane having a molecular weight which is **characterized by** a specific viscosity of 0.5 to 6.0, more particularly 0.7 to 4.0 (1% strength aqueous solution at 20°C).

4. Use according to at least one of Claims 1, 2 or 3, **characterized by** a polyurethane having a melt viscosity of more than 3, preferably more than 5 and more particularly more than 10 Pas at 175°C according to Epprecht for polyurethanes with polyethylene glycol and additional hydrophobic diols.

5. Use according to at least one of Claims 1 to 4, **characterized by** a polyurethane having a degree of crystallization of 20% to 80%, more particularly of 30% to 65%, based on the degree of crystallization of polyethylene glycol, especially commercial polyethylene glycol 6,000.

6. Use according to at least one of Claims 1 to 5 in the form of an aqueous solution of 1% to 40%, more particularly of 2% to 30% by weight of the polyurethane.

7. Use according to at least one of Claims 1 to 6, **characterized in that** the hydrophobic radical of the polyurethane derives from at least one of the following diols: polypropylene glycol, polytetrahydrofuran (both having molecular weights of 400 to 3,000, more particularly 1,000 to 2,000), 1,10-decanediol, 1,12-dodecanediol, 1,12-octadecanediol, 1,2-octanediol, 1,2-dodecanediol, 1,2-tetradecanediol, 1,2-hexadecanediol and 1,2-octadecanediol.

8. Use of the polyurethane according to at least one of Claims 1 to 7 as a basis for a hotmelt adhesive or as a solution adhesive, e.g. wallpaper adhesive or labelling adhesive.

## Revendications

1. Utilisation d'un polyuréthane hydrosoluble non ionique de masse moléculaire élevée, hydrophile, ayant une viscosité spécifique d'au moins 0,4 (solution aqueuse à 1% à 20°C) en tant que base pour une colle, le polyuréthane présentant les motifs structuraux suivants:
a) -O(-CH₂-CH₂-O)ₙ-,
n = 8 à 500, en particulier n valant de 20 à 300
b) -CO-NH-X-NH-CO-,
X représentant un radical aliphatique, alicyclique ou aromatique, et
c) -O-Y-O-,
Y représentant un radical hydrophobe, en particulier soit
(-CH₂-CH(CH₃)-O)ₘ-CH₂-CH(CH₃)-
(-CH₂-CH(C₂H₅)-O)ₘ-CH₂-CH(C₂H₅)- et
(-CH₂-CH₂-CH₂-CH₂-O)ₘ-CH₂-CH₂-CH₂-CH₂-
avec m = 8 à 500, en particulier valant de 20 à 300, ou bien des groupes alkylène ou cycloalkylène ayant de 6 à 36 atomes de C, c) constituant 2 à 30, de préférence 5 à 25% en poids par rapport à a) + c) dans le polyuréthane.

2. Utilisation selon la revendication 1, **caractérisée par** une hydrosolubilité du polyuréthane dans chaque rapport de mélange à 20°C, en particulier par une hydrosolubilité d'au moins 70% en poids, par rapport à la solution.

3. Utilisation selon la revendication 1 ou 2, **caractérisée par** un polyuréthane ayant une masse moléculaire, qui est **caractérisée par** une viscosité spécifique de 0,5 à 6,0, en particulier de 0,7 à 4,0 (solution aqueuse à 1% à 20°C).

4. Utilisation selon au moins l'une quelconque des revendications 1, 2 ou 3, **caractérisée par** un polyuréthane ayant une viscosité à l'état fondu supérieure à 3, de préférence supérieure à 5 et en particulier supérieure à 10 Pa.s à 175°C d'après Epprecht pour les polyuréthanes avec du polyéthylèneglycol et des diols hydrophobes supplémentaires.

5. Utilisation selon au moins l'une quelconque des revendications 1 à 4, **caractérisée par** un polyuréthane ayant un degré de cristallisation de 20 à 80, en particulier de 30 à 65%, par rapport au degré de cristallisation du polyéthylèneglycol, en particulier du polyéthylèneglycol 6 000 du commerce.

6. Utilisation selon au moins l'une quelconque des revendications 1 à 5, sous forme d'une solution aqueuse du polyuréthane à raison de 1 à 40, en particulier de 2 à 30% en poids.

7. Utilisation selon au moins l'une quelconque des revendications 1 à 6, **caractérisée en ce que** le radical hydrophobe du polyuréthane provient d'au moins l'un des diols suivants : le polypropylèneglycol, le polytétrahydrofurane (les deux ayant des masses moléculaires de 400 à 3 000, en particulier de 1 000 à 2 000), le 1,10-décanediol, le 1,12-dodécanediol, le 1,12-octadécanediol, le 1,2-octanediol, le 1,2-dodécanediol, le 1,2-tétradécanediol, le 1,2-hexadécanediol, et le 1,2-octadécanediol.

8. Utilisation du polyuréthane selon au moins l'une des revendications 1 à 7, en tant que base pour une colle fusible ou sous forme de colle en solution, par exemple une colle pour papier peint ou une colle pour étiquette.
